# FASCICULE DE BREVET EUROPEEN

(11) **EP 3 234 508 B1**
(45) Date de publication et mention de la délivrance du brevet: **22.07.2020**
(21) Numéro de dépôt: 15802149.3
(22) Date de dépôt: 02.12.2015
(51) Int. Cl.: G01C 23/00, G01C 21/20, G08G 5/00

(54) **DISPOSITIF D'AFFICHAGE ET DE MISE A JOUR D'UN MOTIF DE TRAJECTOIRE AERIENNE EN REGARD D'UNE ZONE AU SOL, NOTAMMENT POUR UNE MISSION DE LARGAGE**
VORRICHTUNG ZUR ANZEIGE UND AKTUALISIERUNG EINES MIT EINEM GEBIET AUF DEM BODEN AUSGERICHTETEN FLUGBAHNMUSTERS, INSBESONDERE FÜR EINE ABWURFMISSION
DEVICE FOR DISPLAYING AND UPDATING AN AERIAL TRAJECTORY PATTERN ALIGNED WITH AN AREA ON THE GROUND, IN PARTICULAR FOR AN AIR-DROP MISSION

(30) Priorité: 15.12.2014 FR 1402850
(43) Date de publication de la demande: 25.10.2017
(73) Titulaire: Thales, 92400 Courbevoie (FR)
(72) Inventeur: ARNEAU, David, 33608 Pessac Cedex (FR); DUPONT, Guillaume, 33608 Pessac Cedex (FR)
(74) Mandataire: Lucas, Laurent Jacques
(86) Numéro de dépôt international: PCT/EP2015/078287
(87) Numéro de publication internationale: WO 2016/096415

(56) Documents cités:
- US-A1- 2011 199 239
- US-A1- 2013 345 905
- US-A1- 2014 032 105
- US-A1- 2014 039 731
- US-A1- 2014 114 506
- US-A1- 2014 240 147
- US-A1- 2014 365 041

## Description

La présente invention concerne un dispositif d'affichage et de mise à jour de motifs de trajectoires aérienne en regard d'une zone au sol pour des missions de largage. L'invention se situe dans le domaine technique de missions avioniques. Elle concerne la réalisation de missions de largage, encore appelées « Aerial Delivery », à partir d'un aéronef.

Une mission de largage peut s'appliquer à :
- des hommes (parachutistes) ;
- du matériel, par exemple de la nourriture, des tentes, des véhicules, ou des armes.

La zone de largage, aussi appelée « Drop Zone » est une zone rectangulaire dans laquelle les matériels ou les hommes doivent tomber. Elle est définie par un point d'entrée, un point de sortie, une largeur et une altitude.

Pour réussir le largage dans une zone prévue, l'aéronef suit un motif de vol standardisé, appelé motif de largage ou plus couramment « Pattern » de largage.

Le motif de largage est la trajectoire de vol connue et repérée par des points nommés AP, CARP, EOD, EORP et la trajectoire REDO définis ci-après :
- AP : « Alignement Point » - alignement latéral de l'aéronef, ce point permettant aux personnes en soutes de préparer le matériel à larguer en mettant l'avion à plat entre ce point et le point suivant CARP ;
- CARP : « Calculated Air Release Point » - largage, le début de largage débutant en ce point, appelé aussi « lumière verte » ;
- EOD : « End Of Drop Pattern » - fin de largage, la fin de largage ayant lieu en ce point appelé aussi « lumière rouge » ;
- EORP : « End Of Run Point », l'aéronef restant à plat entre les points EOD et EORP pour que les personnes en soute aient le temps de fermer la soute et fixer le matériel restant éventuel ;
- REDO : étant la trajectoire que doit suivre l'aéronef pour revenir au point CARP s'il n'a pas eu le temps de tout larguer lorsqu'il est arrivé au point EOD.

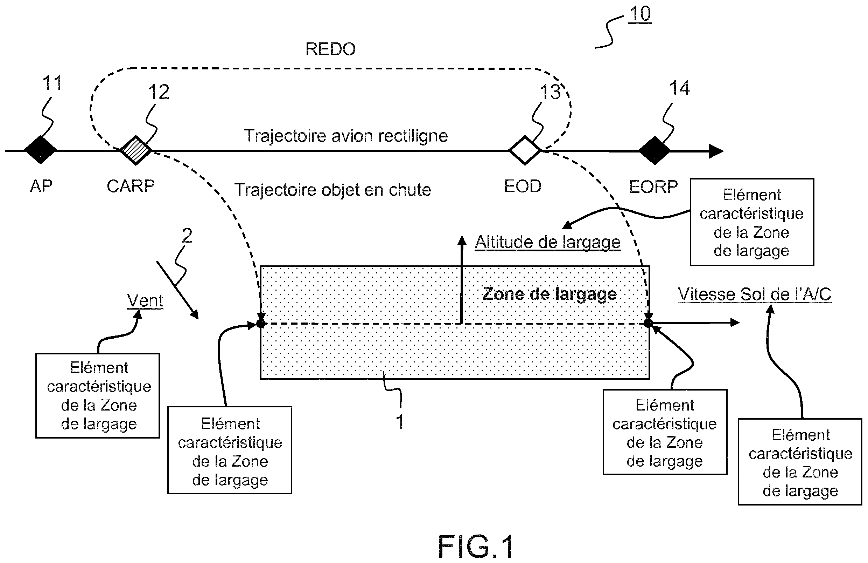

La figure 1 illustre ces points et cette trajectoire 10 par une vue de dessus, en regard de la zone de largage 1. Ces points sont déterminés en prenant en compte les contraintes environnementales et mécaniques. Ces contraintes sont notamment la vitesse et la direction de l'aéronef, la vitesse et l'orientation du vent, l'altitude, le type de parachutes, la masse à larguer, le type de largage, notamment selon qu'il s'agit d'hommes ou de matériels. Le vent considéré est un vent moyen qui tient compte du gradient réel, les caractéristiques du vent 2 étant fournies pour un système météo.

C'est le système de mission de vol (FMS) qui détermine les points AP, CARP, EOD, EORP et la trajectoire REDO en fonction des paramètres de la zone de largage et des contraintes ci-dessus, les paramètres de la zone étant notamment le point d'entrée, le point de sortie, la largeur et l'altitude de largage. Ces paramètres ainsi que les contraintes environnementales et mécaniques sont déterminées manuellement par le pilote et saisies manuellement par le pilote dans le FMS.

Une prédéfinition de la trajectoire de vol est effectuée majoritairement avant la mission puis un ajustage est souvent effectué en vol, soit selon les conditions de vol, soit sur reconnaissance de la zone, ou identification ou recherche au sol. Un moyen de saisie et de calcul automatique est dans ce contexte nécessaire pour réduire la charge de l'opérateur. En effet, les solutions existantes présentent les inconvénients suivant :
- Sur les suites avioniques récentes possédant la fonction de largage, les motifs de largage font partie intégrante du FMS, tous les paramètres étant saisis manuellement par le pilote ;
- Un manque de représentativité graphique en temps réel, l'opérateur saisissant les valeurs techniques et obtenant ensuite une représentation graphique de son motif, qu'il peut alors corréler avec son plan de vol, ou un fond cartographique, confirmant que les paramètres sont corrects. En cas d'erreur, l'opérateur doit ouvrir de nouveau le panneau d'interface homme machine, modifier les paramètres et valider une nouvelle fois le motif sur le plan de vol ou la cartographie, ce processus pouvant se répéter plusieurs fois, augmentant ainsi la charge cognitive du pilote ;
- Une perte de temps pour le pilote qui doit se concentrer sur la gestion de vol plutôt que sur le bon accomplissement de sa mission ;
- De plus, ce type de motif n'est présent que sur certains calculateurs de vols récents, n'étant pas disponible sur des suites avioniques plus anciennes. On cherche donc à apporter une solution permettant le « rétrofit » des anciennes suites avioniques par l'ajout de nouvelles fonctionnalités indépendantes du système avionique, basées notamment sur des tablettes tactiles embarquées.

En résumant, des problèmes actuels sont les suivant :
- Le nombre de paramètres intervenant pour le calcul du motif est important ;
- Dans le cas d'un FMS, les paramètres sont actuellement saisis manuellement par le pilote. En cas de modification du motif, en orientation ou en position, ou de changement de paramètre environnemental, par exemple météo, le pilote doit modifier rapidement son motif de vol, la saisie manuelle des paramètres augmentant la charge cognitive du pilote ;
- Si cette fonction n'est pas disponible dans un FMS, le pilote doit évaluer ces paramètres manuellement sur papier.

Un document US 2014/240147 A1 divulgue un procédé d'assistance au largage, notamment d'une quantité d'eau sur une zone en feu, par un aéronef. Un document US 2014/114506 A1 divulgue un procédé d'aide au pilotage d'un aéronef lors d'un atterrissage.

Un but de l'invention est notamment pallier les inconvénients précités pour simplifier la tâche de l'opérateur de navigation qui doit calculer et positionner le motif de largage, servant au calcul de la trajectoire de l'aéronef. A cet effet, l'invention a pour objet un dispositif selon la revendication 1. Des caractéristiques optionnelles de l'invention sont présentées dans les revendications dépendantes.

D'autres caractéristiques et avantages de l'invention apparaîtront à l'aide de la description qui suit faite en regard de dessins annexés qui représentent :
- La figure 1, une illustration d'un motif de trajectoire de largage en regard de la représentation d'une zone de largage ;
- La figure 2, une illustration du principe de l'invention, avec l'affichage de points de contrôle ;
- La figure 3, un exemple de fonctionnement d'un dispositif selon l'invention ;
- La figure 4, une architecture logicielle possible pour la mise en œuvre d'un dispositif selon l'invention ;
- La figure 5, les figures 6a et 6b, les figures 7a et 7b, les figures 8a et 8b, et les figures 9a et 9b, des exemples d'utilisation d'un dispositif selon l'invention.

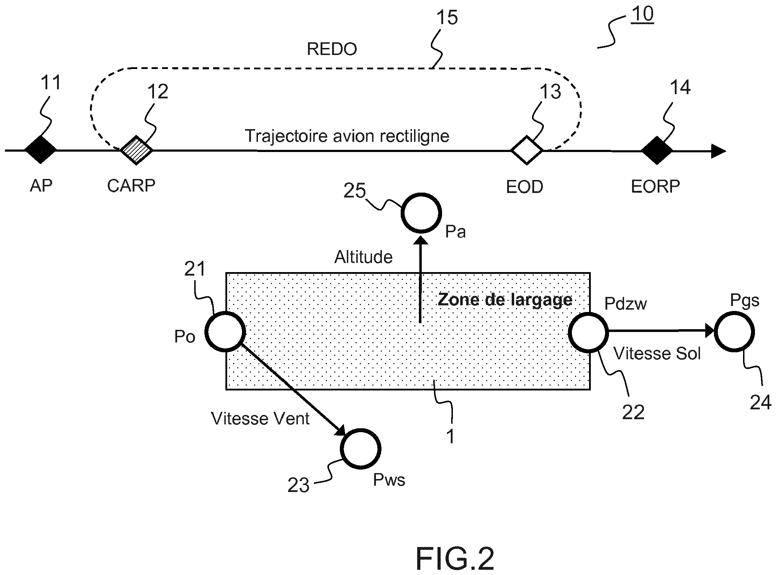

La figure 2 illustre le principe de l'invention. Le dispositif d'affichage présente la zone de largage 1 et la trajectoire 10 déjà illustrés par la figure 1. Cette trajectoire 10, formant le motif de largage, comporte les points caractéristiques 11, 12, 13, 14 décrits précédemment, alignés, et la trajectoire en boucle 15, dite REDO, cette trajectoire 15 rebouclant entre le point EOD et le point CARP. Selon l'invention, on utilise un ensemble de points de contrôle caractéristiques de la zone de largage, où le déplacement d'au moins un point de contrôle modifie les paramètres du motif de largage 10, en particulier la position relative du motif de largage par rapport à la zone de largage 1. Les paramètres du motif de largage 10 sont notamment les positions des points caractéristiques 11, 12, 13, 14.

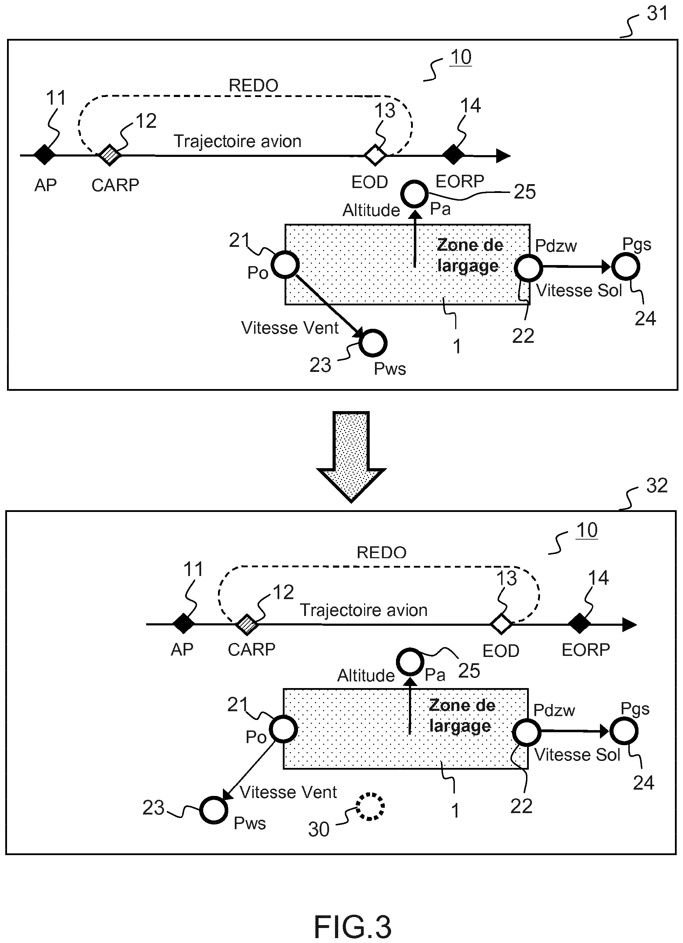

La figure 3 illustre la fonction des points de contrôle par un exemple de déplacement d'un point de contrôle. Une première configuration 31 de la trajectoire de largage 10 et la zone de largage 1 est affichée par le dispositif. Par suite d'un déplacement d'un point de contrôle 23 on obtient une deuxième configuration 32 où le motif de largage 10 est décalé vers la droite par rapport à la zone de largage 1.

Dans cet exemple le point de contrôle 23 utilisé, noté Pws, est un point de contrôle qui permet de modifier la vitesse du vent et son orientation. Cette vitesse est définie par rapport à un autre point de contrôle 21, pris comme le point d'origine de la zone de largage 1, et noté Po. La vitesse du vent est définie par la distance entre les points Pws et Po. L'orientation du vent est définie par l'orientation du point Pws par rapport au point Po.

Pour mettre en évidence le changement d'orientation et de vitesse du vent, le point Pws est déplacé du point 30, position de la première configuration 31, à une nouvelle position. Le motif de largage est déplacé pour tenir compte de ce changement d'orientation et de vitesse du vent.

En pratique, les opérations effectuées sont par exemple les suivantes :
- Un opérateur saisit la zone de largage 1, sur un système cartographique en activant un point de la cartographie via par exemple une interface graphique ;
- Le dispositif selon l'invention envoie une requête au système de gestion de vol (FMS) pour qu'il calcule les points caractéristiques avec les données actuelles de la zone de largage sélectionnée ;
- Le dispositif affiche une première trajectoire avec les points caractéristiques, par exemple AP, CARP, EOD, EORP, la boucle REDO et la zone de largage 1, le dispositif affiche également les points de contrôle ;
- L'opérateur règle la configuration, et notamment la position et la forme du motif de largage 10, en déplaçant les points de contrôle sur l'interface graphique, plusieurs solutions étant possible pour provoquer ce déplacement. Tous moyens d'interactions peuvent être prévus pour manipuler les points de contrôle sur un écran d'affichage. Ces points de contrôle peuvent par exemple être pilotés du doigt sur un écran interactif, une tablette tactile par exemple. On peut en particulier utiliser une technique du type « glisser-déposer » encore appelée « drag and drop ». On peut aussi manipuler les points de contrôle à partir d'un pointeur de désignation, une souris par exemple, sur tout autre écran non interactif ;
- Les nouvelles positions de points de contrôle sont prises en compte par le dispositif qui demande au FMS de calcule en conséquence la nouvelle position des points caractéristiques, par exemple des points AP, CARP, EOD, EORP ;
- La nouvelle trajectoire de largage est affichée.

L'invention utilise donc des points de contrôle dont la fonction est de modifier, de par leur déplacement, la position et l'orientation du motif de la trajectoire de largage, voire sa forme. Le déplacement de certains de ces points entraîne également des modifications de position, orientation ou forme de la zone au sol. Ces points de contrôle sont au moins:
- Un point 21, noté Po et déjà cité, défini comme étant le point d'origine de la zone de largage 1. Ce point Po permet de déplacer la zone de largage, sans changer les autres paramètres, selon une translation définie par le déplacement du point Po. Le point Po est par exemple situé sur un côté de la zone de largage, par exemple au niveau de l'entrée de la zone. Il peut être situé à tout endroit lié à la zone pourvu que son déplacement entraîne le déplacement de la zone selon son déplacement ;
- Un point 22, noté Pdzw, permettant de modifier par son déplacement la longueur de la zone de largage et son orientation par rapport à une direction donnée en azimut. Le point Pdzw est par exemple situé sur le côté de la zone 1 opposé à celui contenant le point Po, en sortie de la zone. Il peut être situé en tout autre endroit lié à la zone ;
ainsi qu'au moins un des points suivants:
- Un point 23, noté Pws et déjà cité, permettant de modifier par son déplacement la vitesse du vent et son orientation qui seront prises en compte pour les calculs des paramètres du motif de largage. Le déplacement du point Pws, en amplitude et en orientation, est mesuré par rapport au point Po ou à tout autre point de référence de la zone ;
- Un point 24, noté Pgs, permettant par son déplacement de modifier la vitesse avion prise en compte dans les calculs des paramètres, la variation de vitesse de l'avion étant par exemple fonction du déplacement du point Pgs. Le déplacement du point Pgs, en amplitude et en orientation, est par exemple mesuré ou défini par rapport au point Pdzw ou à tout autre point de référence de la zone ;
- Un point 25, noté Pa, permettant par son déplacement de modifier l'altitude de largage de l'avion, donc de la trajectoire, la variation d'altitude étant fonction du déplacement du point Pa. L'amplitude du déplacement du point Pa est par exemple mesurée ou définie par rapport à une position de référence.

Il est aussi possible de prévoir l'ajout d'un point de contrôle permettant de modifier la largeur de la zone de largage.

Lorsqu'un point de contrôle est déplacé, la valeur modifiée apparaît par exemple au-dessus du point afin que l'opérateur ait une estimation exacte de cette valeur, cette ou ces valeur(s) étant par exemple la vitesse et l'orientation du vent ou la vitesse de l'avion.

Les points de contrôle ci-dessus génèrent des modifications de position et/ou d'orientation de la zone de largage, ainsi que de forme. Ils génèrent aussi des modifications des conditions d'environnement à prendre en compte pour le largage des éléments, notamment la vitesse et la direction du vent, la vitesse de l'avion ou l'altitude de la zone. L'affichage et la mise à jour du motif de largage est fonction des variations des paramètres de largage. Ces paramètres de largage sont notamment la position, d'orientation ou de forme de la zone de largage, et/ou des variations des conditions d'environnement, ces variations étant caractérisées par les déplacements des points de contrôle. Une fois connus la configuration de la zone et des conditions d'environnement caractérisée par les nouvelles positions des points de contrôle, la positon et l'orientation du motif de largage sont calculées de façon connue de l'homme de l'art, le calcul portant sur les points caractéristiques du motif. Par exemple, il est connu de situer la trajectoire de largage par rapport à la zone de largage, en fonction du vent, de la vitesse avion, ou de l'altitude et de la position/forme de la zone.

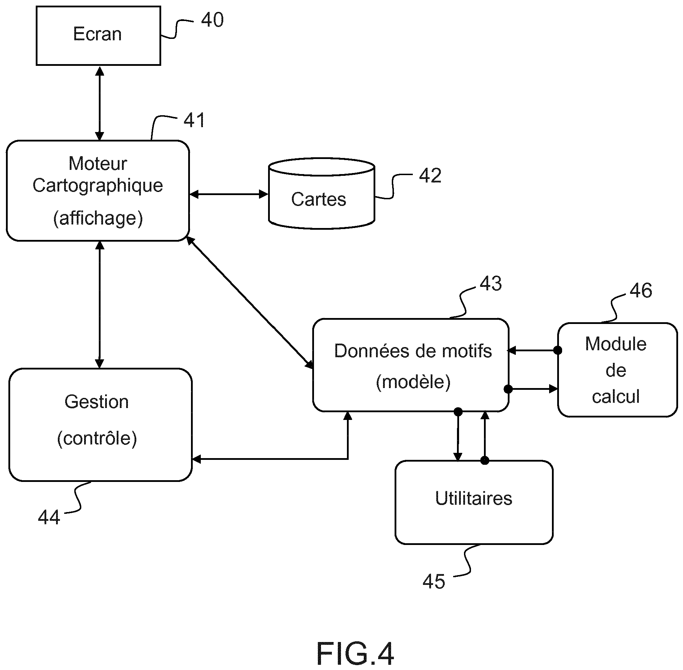

La figure 4 présente un exemple d'architecture logicielle implémentée dans un dispositif selon l'invention, ainsi qu'un écran 40 pour l'affichage du motif de la trajectoire de largage et de la représentation de la zone de largage. Il comporte notamment :
- Un module moteur cartographique 41 chargé de l'affichage du graphique correspondant au motif de trajectoire 10 et à la zone de largage 1, de l'affichage du fond cartographique et des interactions avec l'utilisateur, par exemple la gestion du « drag and drop » ou la gestion des clics de souris ;
- Une base de données de cartes 42, contenant au moins la ou les cartes numérisées des lieux où sont situées les zones de largage, ainsi que des données géographiques et des données aéronautiques. Cette base est accédée par le moteur graphique qui effectue l'affichage des données et cartes mémorisées dans cette base. Dans un autre mode de réalisation possible, cette base 42 peut être extérieure au dispositif, les cartes numérisées pouvant être téléchargées par exemple ;
- Un module de données 43, apte à stocker et à mettre à jour toutes les données relatives aux motifs de largage et aux zones de largage. En particulier, ce module 43 est apte à stocker et à mettre à jour les points caractéristiques AP, CARP, EOD, EORP et la trajectoire REDO. Le module comporte également les paramètres environnementaux et de la zone de largage, notamment les suivants :
   - La vitesse du vent ;
   - La vitesse du porteur ;
   - La position de la zone de largage ;
   - La taille de la zone de largage ;
   - L'orientation de la zone de largage.
- Un module de gestion 44 dont la fonction est de récupérer les interactions d'un utilisateur ou d'un opérateur, de les interpréter et de requérir auprès du module de données 43 la mise à jour des données relatives aux motifs et aux zones de largage ;
- Un module utilitaire 45 ayant pour fonction de fournir des primitives de calcul trigonométrique en géométrie sphérique, afin de permettre le calcul de la position des tous les points d'un motif dans un repère géographique, plan, à partir de la connaissance des paramètres techniques d'un motif. Ces primitives de calcul sont fournies au module de données de motifs 43 qui intègre le module de calcul des positions de points des motifs.
- Un module de calcul 46 en charge de calculs balistiques selon les différentes formes de l'état de l'art. Le module de données 43 étant en interface avec ce module de calcul 44, les données envoyées par le module de données sont notamment les paramètres de la zone de largage et les caractéristiques calculées du motif de largage AP, CARP, EOD, EORP, REDO.

Un exemple de fonctionnement est décrit selon les étapes suivantes :
- Un utilisateur demande d'afficher un motif de largage sur la cartographie, par exemple par un clic sur un choix déroulant pour sélectionner le motif de largage, puis par un clic sur l'endroit de la cartographie où le motif doit être affiché. Le moteur cartographique 41 détermine les coordonnées géographiques réelles du point désigné par l'utilisateur ;
- Les différentes interactions correspondantes sont envoyées par le moteur cartographique 41 au module de gestion 44, notamment le motif à afficher et sa position (longitude, latitude). Le module de gestion 44 demande au module de données 43 d'initialiser le motif avec les données « ladder, longitude, latitude », passées en paramètres ;
- Le module de données 43 met à jours les données et demande au moteur cartographique 41 d'afficher le motif par appel de primitives et de listes de points ;
- Le moteur cartographique 41 affiche le graphique correspondant au motif et à la zone de largage calculés ;
- L'utilisateur fait par exemple un « drag and drop » du point de contrôle Po qui est l'origine de la zone de la zone de largage, le motif devant être translaté. Le moteur cartographique 41 interagit avec l'utilisateur et récupère le nouveau point Po ;
- Les différentes interactions correspondantes sont envoyées par le moteur cartographique 41 au module de gestion 44, notamment la nouvelle position du point Po de la zone de largage (longitude, latitude). Le module de gestion 44 demande alors au module de données 43 de modifier le motif avec le nouveau point Po passé en paramètre « longitude, latitude » ;
- Le module de données 43 :
   - Calcule les nouveaux points formant la zone de largage, pouvant s'aider du module utilitaire 45 pour les calculs trigonométriques, il met à jour les données du motif ;
   - Envoie au module de calcul 46 les nouvelles caractéristiques de la zone de largage : vitesse du vent, vitesse du porteur, position de la zone de largage, taille de la zone de largage, orientation de la zone de largage, en retour le module de calcul 46 calcule les points AR, CARP, EOD, EORP, la trajectoire REDO et les envoie au module de données 43 ;
   - Demande au moteur cartographique d'afficher le motif par appel de primitive et d'une nouvelle liste de points ;
- Le moteur cartographique affiche le motif de largage modifié ainsi que la zone de largage modifiée.

Les figures qui suivent illustrent plusieurs exemples d'utilisation des points de contrôle sur l'écran d'un dispositif selon l'invention. Plus particulièrement, ces figures illustrent le fonctionnement des différents points de contrôle pour un motif de largage 10.

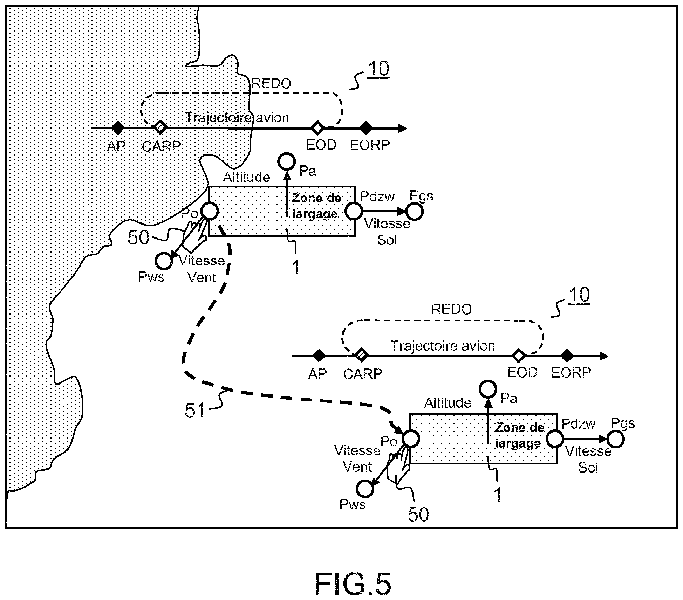

La figure 5 illustre un premier cas où l'on déplace le point d'origine Po de la zone de largage 1. Plus particulièrement, la figure 5 présente un cas de « drag and drop » effectué par un doigt 50 selon un trajet 51 guidant le déplacement du point de contrôle Po. Le motif de largage 10 est translaté selon le déplacement du point Po.

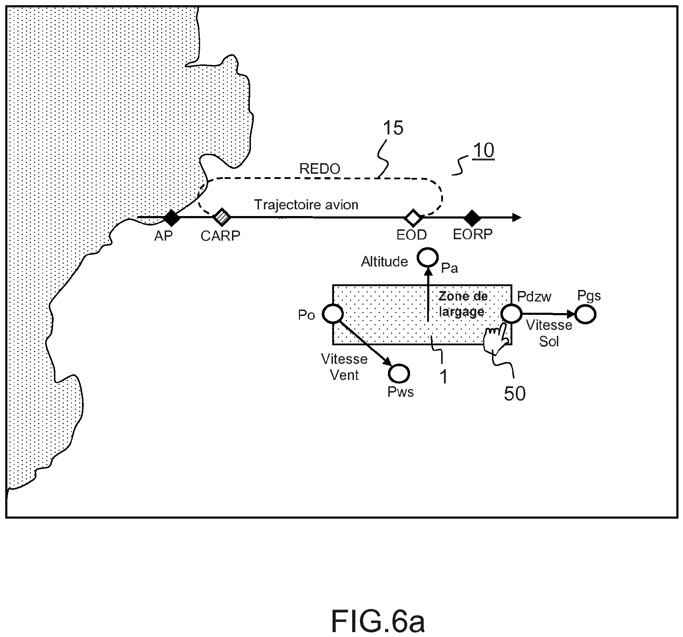

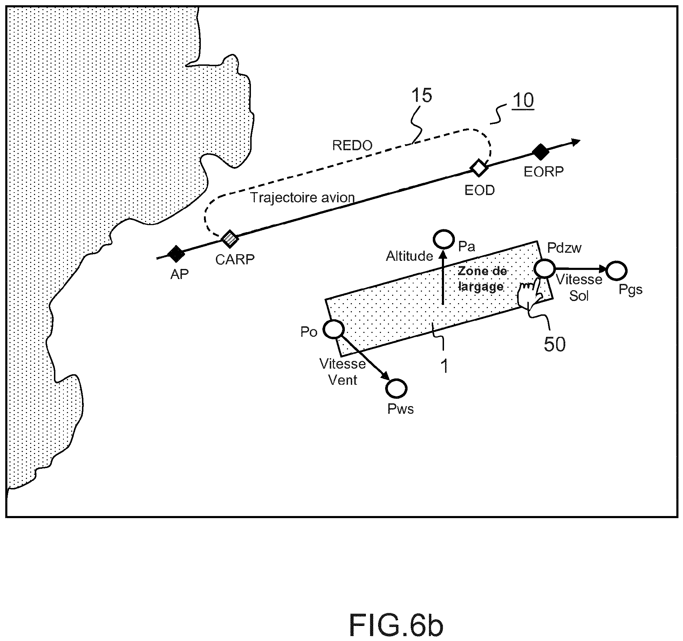

Les figures 6a et 6b illustrent un deuxième cas où l'on déplace le point de contrôle Pdzw. Le point d'origine Po restant fixe, ce point est déplacé vers la droite et vers le haut provoquant un allongement et une rotation de la zone de largage 1. Tous les points du motif de largage et notamment les points caractéristiques sont déplacés du même mouvement provoquant la rotation du motif et l'allongement de la boucle REDO 15.

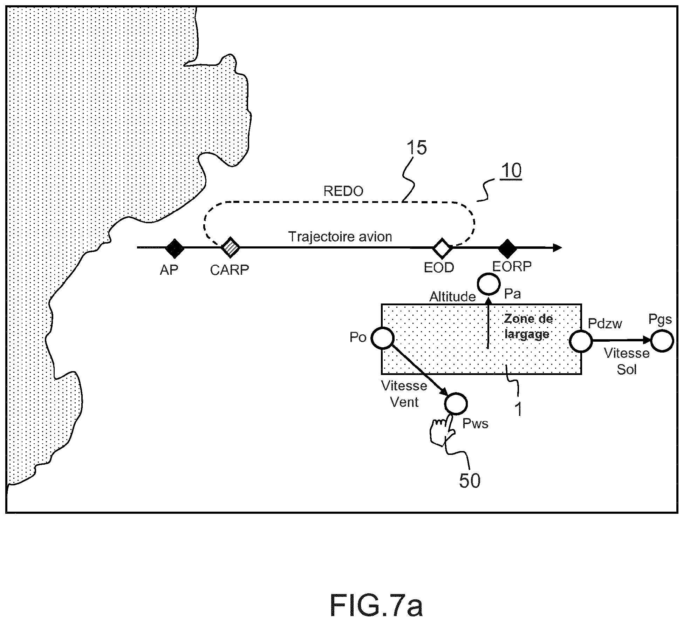

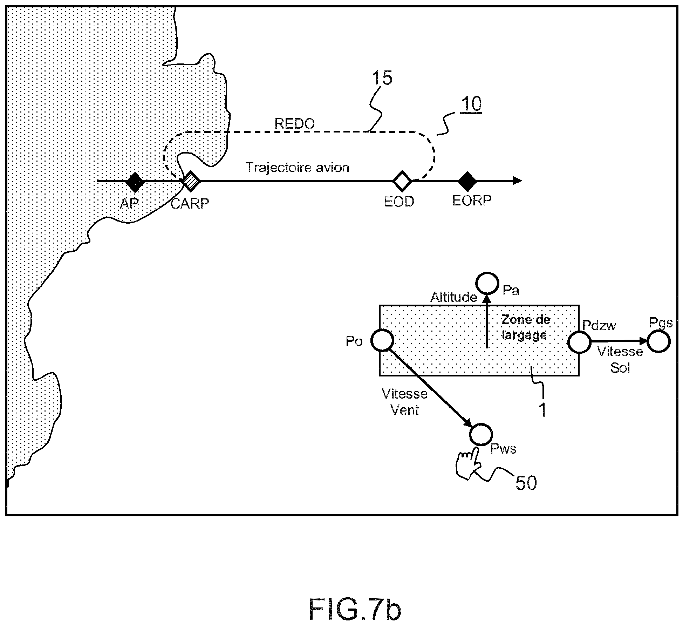

Les figures 7a et 7b illustrent un troisième cas où la vitesse du vent est modifiée. La modification de la vitesse du vent s'effectue par le déplacement du point de contrôle Pws par rapport au point d'origine Po, son orientation restant inchangée. La variation de la vitesse du vent entre la figure 7a et la figure 7b correspond à une augmentation de la vitesse du vent par augmentation de la distance entre le point Pws et le point Po. Plus le vent est fort, plus la trajectoire de l'avion s'éloigne de la zone de largage. Sur la représentation le motif de largage 10 s'éloigne donc de la zone de largage 1.

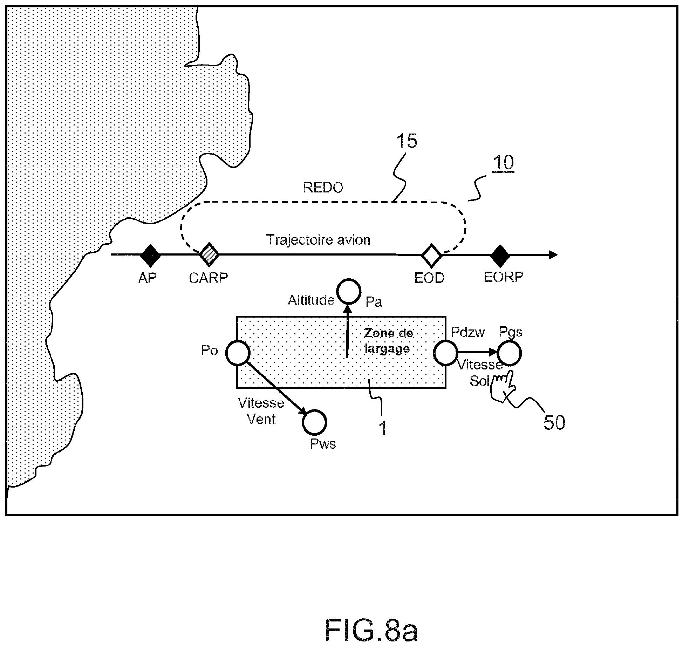

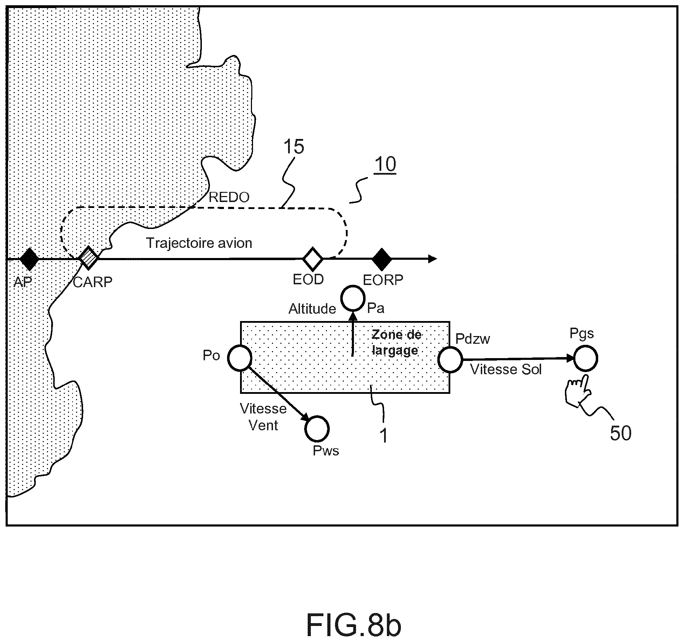

Les figures 8a et 8b illustrent un quatrième cas où la vitesse de l'avion par rapport au sol est modifiée. La modification de la vitesse de l'avion s'effectue par le déplacement du point de contrôle Pgs par rapport au point d'origine Po, son orientation restant inchangée. La variation de la vitesse de l'avion entre la figure 8a et la figure 8b correspond à une augmentation de la vitesse par augmentation de la distance entre le point Pgs et le point Pdzw. Plus la vitesse élevée, plus la trajectoire de l'avion s'éloigne de la zone de largage, dans le sens opposé du déplacement de l'avion. Sur la représentation le motif de largage 10 s'éloigne donc de même de la zone de largage 1.

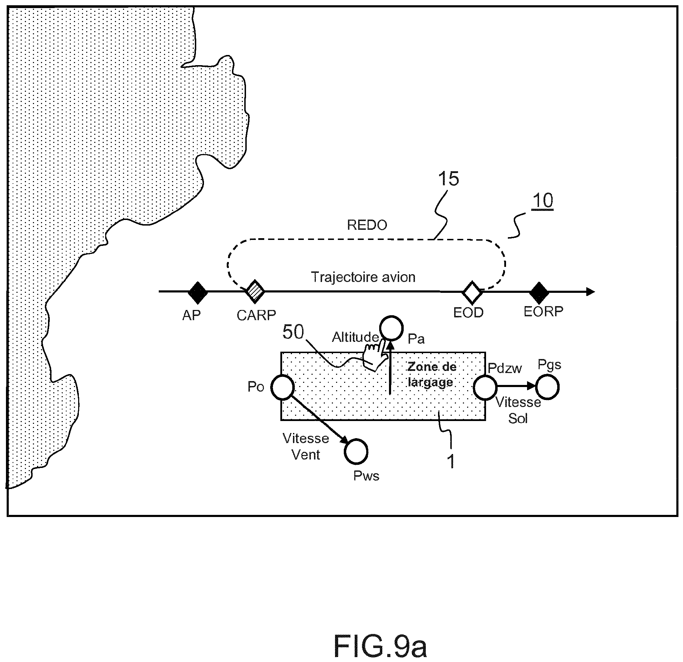

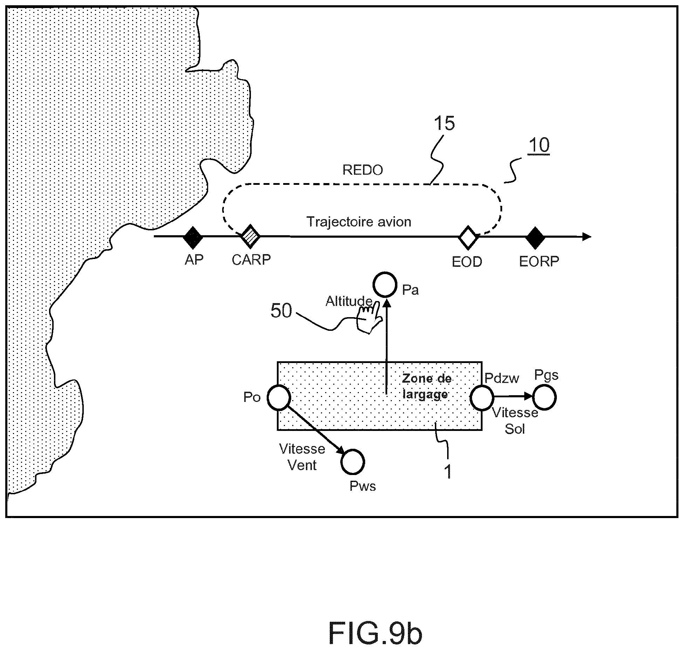

Les figures 9a et 9b illustrent un cinquième cas où l'altitude de la zone de largage 1 est modifiée. La variation d'altitude de la zone 1 s'effectue par le déplacement du point de contrôle Pa. La variation d'altitude de la zone entre la figure 9a et la figure 9b correspond à une augmentation de l'altitude. Plus la vitesse élevée, plus la trajectoire de l'avion décrite par le motif 10 s'éloigne de la zone de largage, dans le sens opposé du déplacement de l'avion.

L'invention permet avantageusement de modifier les paramètres de largage en interagissant directement sur la représentation graphique du motif de largage. La modification d'un paramètre par exemple par un « drag and drop » entraîne un calcul immédiat du motif de largage et sa mise à jour graphique en temps réel. L'ergonomie d'utilisation est améliorée par rapport aux interfaces classiques, ces dernières faisant apparaître une boîte de dialogue avec une liste de paramètres techniques sous forme de chiffres, puis dans un deuxième temps la modification du graphique du motif une fois la boîte de dialogue fermée.

Dans un mode de réalisation avantageux, l'invention peut être implémentée sur une tablette tactile EFB, le motif de largage pouvant être dessiné au dessus d'un fond cartographique pour améliorer la perception du terrain qui recevra les éléments largués. La tablette peut être embarquée dans le cockpit d'un avion de transport ou dans un hélicoptère. L'invention peut avantageusement être déployée sur une tablette EFB dans le cadre d'un réaménagement ou « rétrofit » de cockpit pour ajouter une fonctionnalité à une suite avionique qui ne dispose pas de cette fonction.

Dans un autre mode de réalisation, la fonction mise en œuvre par l'invention peut être embarquée dans un calculateur de mission avec une représentation graphique faite sur une visualisation du type écran interactif déjà présent dans le cockpit.

Avantageusement, le dispositif selon l'invention peut aussi permettre à l'opérateur de changer les points CARP et EOD. Les points Po et Pdzw suivront alors les changements de CARP et EOD.

Avantageusement, la trajectoire réelle de l'avion peut être superposée et la trace de la largeur d'incertitude de largage représenté au sol suit les mêmes hypothèses précitées. Cela permet au pilote de vérifier que l'impact au sol du largage est dans la zone.

## Revendications

1. Dispositif de visualisation et de mise à jour d'un motif de trajectoire (10) décrivant la portion de trajectoire que doit suivre un aéronef pour opérer un largage sur une zone de largage au sol, ledit dispositif réalisant l'affichage dudit motif de trajectoire (10) en regard de la représentation d'une zone de largage (1), la position, l'orientation et/ou la forme dudit motif de trajectoire visualisé étant fonction de la position et de l'orientation de ladite zone de largage (1) et de paramètres de trajectoire définissant la trajectoire dudit aéronef; ledit dispositif comportant au moins des moyens d'affichage (40, 41) pour visualiser ledit motif (10) et ladite représentation de la zone de largage (1) et des moyens (43, 45, 46) de calcul et de mémorisation des données de position dudit motif et de la représentation de ladite zone de largage (1); ledit dispositif de visualisation affichant sur lesdits moyens d'affichage des points de contrôle (21, 22) définissant, la position, l'orientation et la longueur de la représentation de la zone de largage (1), ces points de contrôle étant au moins un point Po (21) d'origine de la zone de largage et un point Pdzw (22) permettant de modifier par son déplacement la longueur de la zone de largage et son orientation, et au moins un point de contrôle (23, 24, 25) lié à la représentation de ladite zone de largage (1), dont la position vis-à-vis de cette dernière définissant les valeurs des paramètres de la trajectoire de largage dudit aéronef, ledit au moins un point de contrôle consistant en un point Pws (23) permettant de modifier par son déplacement la valeur de la vitesse du vent et son orientation, en un point Pgs (24) permettant par son déplacement de modifier la vitesse de l'aéronef, ou en un point Pa (25) permettant par son déplacement de modifier l'altitude de largage de l'aéronef, la variation des valeurs des paramètres de la trajectoire de largage étant fonction du déplacement de points de contrôle par interaction d'un opérateur (50) avec ledit dispositif de visualisation.

2. Dispositif selon la revendication 1, **caractérisé en ce que** le déplacement du point de contrôle Po (21) entraine la translation, selon ledit déplacement, de la zone de largage affichée.

3. Dispositif selon la revendication 2, **caractérisé en ce que** le déplacement du point de contrôle Pdzw (22) permet de modifier la longueur et l'orientation de la zone de largage affichée (1).

4. Dispositif selon l'une quelconque des revendications précédentes, **caractérisé en ce que** l'amplitude et la direction du vent formant un desdits paramètres de trajectoire, ledit dispositif affiche sur lesdits moyens d'affichage (40, 41), le point de contrôle Pws (23) permettant de modifier par son déplacement la valeur de la vitesse du vent et son orientation, la vitesse du vent étant définie par la distance entre les points Pws (23) et le point Po (21) d'origine de la zone de largage, l'orientation du vent étant définie par l'orientation du point Pws (23) par rapport au point Po.

5. Dispositif selon l'une quelconque des revendications précédentes, **caractérisé en ce que** la vitesse d'un aéronef suivant ladite trajectoire étant un desdits paramètres de trajectoire, ledit dispositif affiche sur lesdits moyens d'affichage (40, 41) le point de contrôle Pgs (24) dont le déplacement définit la variation de vitesse dudit aéronef, le déplacement du point Pgs (24), en amplitude et en orientation étant défini par rapport au point Pdzw (22).

6. Dispositif selon l'une quelconque des revendications précédentes, **caractérisé en ce que** l'altitude de ladite zone de largage (1) étant un desdits paramètres de trajectoire, ledit dispositif affiche sur lesdits moyens d'affichage (40, 41) le point de contrôle Pa (25), dont l'amplitude du déplacement, par rapport à un point de référence, définit l'amplitude de la variation d'altitude de ladite zone de largage (1).

7. Dispositif selon l'une quelconque des revendications précédentes, **caractérisé en ce que** :
- les moyens de calcul et de mémorisation comportent au moins un module de données (43) apte à stocker et calculer lesdites données de position et lesdits points de contrôle ;
- les moyens d'affichage comportent au moins un écran (40) et un moteur de cartographique (41) détectant les interactions de l'opérateur sur l'écran et commandant l'affichage dudit motif (10) et de ladite représentation (1) avec ses points de contrôle, à partir des calculs de position fournis par le module de données (43).

8. Dispositif selon la revendication 7, **caractérisé en ce que** les moyens de calcul et de mémorisation comportent un module utilitaire (45) ayant pour fonction de fournir au module de données (43) des primitives de calculs trigonométriques en géométrie sphérique pour le calcul desdites positions.

9. Dispositif selon l'une quelconque des revendications 7 ou 8, **caractérisé en ce qu'**il comporte un module de gestion (44) ayant pour fonction d'interpréter les interactions de l'opérateur détectées par le moteur cartographique (41) et de requérir auprès du module de données (43) les modifications de ladite représentation (1) lorsqu'une interaction commande le déplacement d'un point de contrôle, une mise à jour dudit motif (10) affiché sur l'écran (40) étant effectuée par une interaction de l'opérateur commandant le déplacement d'au moins un point de contrôle, le moteur cartographique (41) fournissant au module de gestion (44) la nouvelle position dudit point de contrôle, le module de données calculant les nouvelles positions dudit motif (10) en fonction des nouvelles valeurs desdits paramètres de trajectoire résultant du déplacement (51) dudit point de contrôle.

10. Dispositif selon l'une quelconque des revendications précédentes, **caractérisé en ce qu'**il comporte une base de données de cartes (42) contenant des cartes numérisées représentant une zone géographique comportant la dite représentation de la zone (1), ledit motif (10) étant superposé à une zone géographique.

11. Dispositif selon la revendication l'une quelconque des revendications précédentes, **caractérisé en ce que** la position, l'orientation et/ou la forme dudit motif de trajectoire (10) sont définies par un ensemble de points caractéristiques (11, 12, 13, 14), la position desdits points est déterminée par lesdits paramètres de trajectoire.

12. Dispositif selon la revendication 11, **caractérisé en ce qu'**un point dudit ensemble de points caractéristiques est un point CARP de début de largage (12) et qu'un autre point dudit ensemble de points caractéristiques est un point EOD de fin de largage (13), lesdits points sont aptes à être modifiés par ledit opérateur.

13. Dispositif selon l'une quelconque des revendications 10 à 12, **caractérisé en ce que** la trajectoire aérienne réelle suivie par un aéronef est superposée à ladite trajectoire de largage.

14. Dispositif selon l'une quelconque des revendications précédentes, **caractérisé en ce que** les moyens d'affichage comportent un écran (40) interactif.

15. Dispositif selon la revendication 14, **caractérisé en ce que** l'écran (40) est tactile.

16. Dispositif selon la revendication 15, **caractérisé en ce que** l'écran (40) tactile se présente sous la forme d'une tablette.

17. Dispositif selon l'une quelconque des revendications 1 à 15, **caractérisé en ce que** les moyens de calcul et de mémorisation (43, 45) sont implantés dans un calculateur embarqué.

## Patentansprüche

1. Vorrichtung zum Anzeigen und Aktualisieren eines Bahnmusters (10), das den Bahnabschnitt beschreibt, dem ein Luftfahrzeug folgen muss, um einen Abwurf in einer Abwurfzone am Boden durchzuführen, wobei die Vorrichtung das Bahnmuster (10) in Bezug auf die Darstellung einer Abwurfzone (1) anzeigt, wobei Position, Orientierung und/oder Form des angezeigten Bahnmusters von der Position und der Orientierung der Abwurfzone (1) und von Bahnparametern abhängig sind, die die Bahn des Luftfahrzeugs definieren; wobei die Vorrichtung mindestens Anzeigemittel (40, 41) zum Anzeigen des Musters (10) und der Darstellung der Abwurfzone (1) sowie Mittel (43, 45, 46) zum Berechnen und Speichern von Daten der Position des Musters und der Darstellung der Abwurfzone (1) umfassen; wobei die Anzeigevorrichtung auf den Anzeigemitteln Kontrollpunkte (21, 22) anzeigt, die Position, Orientierung und Länge der Darstellung der Abwurfzone (1) definieren, wobei diese Kontrollpunkte mindestens ein Ausgangspunkt Po (21) der Abwurfzone und ein Punkt Pdzw (22) sind, die das Verändern der Länge der Abwurfzone und ihrer Orientierung durch Bewegen derselben zulassen, und mindestens einen Kontrollpunkt (23, 24, 25), der mit der Darstellung der Abwurfzone (1) verbunden ist, dessen Position gegenüber Letzterer die Werte von Parametern der Abwurfbahn des Luftfahrzeugs definiert, wobei der mindestens eine Kontrollpunkt aus einem Punkt Pws (23), der das Verändern des Wertes der Geschwindigkeit des Windes und seiner Orientierung durch Bewegen desselben zulässt, einem Punkt Pgs (24), der das Verändern der Geschwindigkeit des Luftfahrzeugs durch Bewegen desselben zulässt, oder einem Punkt Pa (25), der das Verändern der Abwurfhöhe des Luftfahrzeugs durch Bewegen desselben zulässt, besteht, wobei die Variation der Werte von Parametern der Abwurfbahn von der Bewegung von Kontrollpunkten durch eine Interaktion eines Bedieners (50) mit der Anzeigevorrichtung abhängig ist.

2. Vorrichtung nach Anspruch 1, **dadurch gekennzeichnet, dass** die Bewegung des Kontrollpunkts Po (21) die Verschiebung, gemäß der Bewegung, der angezeigten Abwurfzone mit sich bringt.

3. Vorrichtung nach Anspruch 2, **dadurch gekennzeichnet, dass** die Bewegung des Kontrollpunkts Pdzw (22) eine Veränderung der Länge und Orientierung der angezeigten Abwurfzone (1) zulässt.

4. Vorrichtung nach einem der vorherigen Ansprüche, **dadurch gekennzeichnet, dass**, wenn Amplitude und Richtung des Windes einen der Bahnparameter bilden, die Vorrichtung auf den Anzeigemitteln (40, 41) den Kontrolpunkt Pws (23) anzeigt, der das Verändern des Wertes der Geschwindigkeit des Windes und seiner Orientierung durch Bewegen desselben zulässt, wobei die Geschwindigkeit des Windes durch den Abstand zwischen den Punkten Pws (23) und dem Ursprungspunkt Po (21) der Abwurfzone definiert wird, wobei die Orientierung des Windes durch die Orientierung des Punkts Pws (23) in Bezug auf den Punkt Po definiert wird.

5. Vorrichtung nach einem der vorherigen Ansprüche, **dadurch gekennzeichnet, dass**, wenn die Geschwindigkeit eines der Bahn folgenden Luftfahrzeugs einer der Bahnparameter ist, die Vorrichtung auf den Anzeigemitteln (40, 41) den Kontrollpunkt Pgs (24) anzeigt, dessen Bewegung die Geschwindigkeitsvariation des Flugzeugs definiert, wobei die Bewegung des Punkts Pgs (24) in Amplitude und Orientierung in Bezug auf den Punkt Pdzw (22) definiert wird.

6. Vorrichtung nach einem der vorherigen Ansprüche, **dadurch gekennzeichnet, dass**, wenn die Höhe der Abwurfzone (1) einer der Bahnparameter ist, die Vorrichtung auf den Anzeigemitteln (40, 41) den Kontrollpunkt Pa (25) anzeigt, dessen Bewegungsamplitude, in Bezug auf einen Referenzpunkt, die Amplitude der Höhenvariation der Abwurfzone (1) definiert.

7. Vorrichtung nach einem der vorherigen Ansprüche, **dadurch gekennzeichnet, dass**:
- die Rechen- und Speichermittel mindestens ein Datenmodul (43) umfassen, das die Positionsdaten und die Kontrollpunkte speichern und berechnen kann;
- die Anzeigemittel mindestens einen Bildschirm (40) und eine Kartografie-Engine (41) umfassen, die die Interaktionen des Bedieners auf dem Bildschirm erkennt und die Anzeige des Musters (10) und der Darstellung (1) mit ihren Kontrollpunkten auf der Basis der vom Datenmodul (43) gelieferten Positionsberechnungen steuert.

8. Vorrichtung nach Anspruch 7, **dadurch gekennzeichnet, dass** die Rechen- und Speichermittel ein Utility-Modul (45) mit der Funktion umfassen, das Datenmodul (43) mit Primitiven für trigonometrische Berechnung in sphärischer Geometrie für die Berechnung der Positionen zu versorgen.

9. Vorrichtung nach Anspruch 7 oder 8, **dadurch gekennzeichnet, dass** sie ein Management-Modul (44) mit der Funktion umfasst, die Interaktionen des Bedieners wie von der Kartografie-Engine (41) erkannt zu interpretieren und vom Datenmodul (43) die Veränderungen der Darstellung (1) anzufordern, wenn eine Interaktion die Bewegung eines Kontrollpunkts befiehlt, wobei eine Aktualisierung des auf dem Bildschirm (40) angezeigten Musters (10) durch eine Interaktion des Bedieners erfolgt, der die Bewegung mindestens eines Kontrollpunkts befiehlt, wobei die Kartografie-Engine (41) das Management-Modul (44) mit der neuen Position des Kontrollpunkts versorgt, wobei das Datenmodul die neuen Positionen des Musters (10) in Abhängigkeit der neuen Werte der Bahnparameter berechnet, die aus der Bewegung (51) des Kontrollpunkts resultieren.

10. Vorrichtung nach einem der vorherigen Ansprüche, **dadurch gekennzeichnet, dass** sie eine Kartendatenbank (42) umfasst, die digitalisierte Karten enthält, die eine geografische Zone darstellen, die die Darstellung der Zone (1) umfasst, wobei das Muster (10) einer geografischen Zone überlagert ist.

11. Vorrichtung nach einem der vorherigen Ansprüche, **dadurch gekennzeichnet, dass** Position, Orientierung und/oder Form des Bahnmusters (10) durch einen Satz von charakteristischen Punkten (11, 12, 13, 14) definiert werden, wobei die Position der Punkte durch die Bahnparameter bestimmt wird.

12. Vorrichtung nach Anspruch 11, **dadurch gekennzeichnet, dass** ein Punkt des Satzes von charakteristischen Punkten ein Abwurfstartpunkt CARP (12) ist und ein anderer Punkt des Satzes von charakteristischen Punkten ein Abwurfendpunkt EOD (13) ist, wobei die Punkte vom Bediener modifiziert werden können.

13. Vorrichtung nach einem der Ansprüche 10 bis 12, **dadurch gekennzeichnet, dass** die von einem Luftfahrzeug verfolgte reale Flugbahn der Abwurfbahn überlagert ist.

14. Vorrichtung nach einem der vorherigen Ansprüche, **dadurch gekennzeichnet, dass** die Anzeigemittel einen interaktiven Bildschirm (40) umfassen.

15. Vorrichtung nach Anspruch 14, **dadurch gekennzeichnet, dass** der Bildschirm (40) taktil ist.

16. Vorrichtung nach Anspruch 15, **dadurch gekennzeichnet, dass** der taktile Bildschirm (40) in Form eines Tablet vorliegt.

17. Vorrichtung nach einem der Ansprüche 1 bis 15, **dadurch gekennzeichnet, dass** die Rechen- und Speichermittel (43, 45) in einen On-Board-Rechner integriert sind.

## Claims

1. Device for displaying and updating a trajectory pattern (10) which describes the trajectory portion which an aircraft must follow in order to perform a drop over a drop zone on the ground, the device displaying the trajectory pattern (10) regarding the representation of a drop zone (1), the position, the orientation and/or the shape of the trajectory pattern represented being a function of the position and the orientation of the drop zone (1) and trajectory parameters which define the trajectory of the aircraft; the device comprising at least display means (40, 41) in order to display the pattern (1) and the representation of the drop zone (1) and means (43, 45, 46) for calculating and storing the position data of the pattern and the representation of the drop zone (1); the display device displaying on the display means control points (21, 22) which define the position, the orientation and the length of the representation of the drop zone (1), these control points being at least a point Po (21) of origin of the drop zone and a point Pdzw (22) which enables the length and the orientation of the drop zone to be modified by means of the movement thereof, and at least one control point (23, 24, 25) linked to the representation of the drop zone (1), whose position with respect to the drop zone defines the parameter values of the drop trajectory of the aircraft, the at least one control point consisting of a point Pws (23) which enables the value and orientation of the wind speed to be modified by means of the movement thereof, a point Pgs (24) which enables the speed of the aircraft to be modified by means of the movement thereof or a point Pa (25) which enables the drop altitude of the aircraft to be modified by means of the movement thereof, the variation of the parameter values of the drop trajectory being a function of the movement of control points by means of interaction of an operator (50) with the display device.

2. Device according to claim 1, **characterised in that** the movement of the control point Po (21) brings about the translational movement, in accordance with the movement, of the drop zone displayed.

3. Device according to claim 2, **characterised in that** the movement of the control point Pdzw (22) enables the length and orientation of the displayed drop zone (1) to be modified.

4. Device according to any one of the preceding claims, **characterised in that** the amplitude and the direction of the wind forming one of the trajectory parameters, the device displays on the display means (40, 41) the control point Pws (23) which as a result of the movement thereof enables the value of the wind speed and the orientation thereof to be modified, the speed of the wind being defined by the distance between the points Pws (23) and the point Po (21) of origin of the drop zone, the orientation of the wind being defined by the orientation of the point Pws (23) relative to the point Po.

5. Device according to any one of the preceding claims, **characterised in that** the speed of an aircraft following the trajectory being one of the trajectory parameters, the device displays on the display means (40, 41) the control point Pgs (24) whose movement defines the speed variation of the aircraft, the movement of the point Pgs (24) in terms of amplitude and orientation being defined relative to the point Pdzw (22).

6. Device according to any one of the preceding claims, **characterised in that**, the altitude of the drop zone (1) being one of the trajectory parameters, the device displays on the display means (40, 41) the control point Pa (25) whose movement amplitude, relative to a reference point, defines the amplitude of the altitude variation of the drop zone (1).

7. Device according to any one of the preceding claims, **characterised in that**:
- the calculation and storage means comprise at least one data module (43) which is capable of storing and calculating the position data and the control points;
- the display means comprise at least one screen (40) and a mapping engine (41) which detects the interactions of the operator on the screen and which controls the display of the pattern (10) and the representation (1) with the control points thereof, on the basis of the position calculations provided by the data module (43).

8. Device according to claim 7, **characterised in that** the calculation and storage means comprise a utility model (45) which serves to supply to the data module (43) spherical geometry trigonometric calculation primitives (43) for the calculation of the positions.

9. Device according to any one of claim 7 or 8, **characterised in that** it comprises a control module (44) which serves to interpret the interactions of the operator detected by the mapping engine (41) and to request from the data module (43) the modifications of the representation (1) when an interaction controls the movement of a control point, an updating of the pattern (10) displayed on the screen (40) being carried out by an interaction of the operator controlling the movement of at least one control point, the mapping engine (41) supplying to the control module (44) the new position of the control point, the data module calculating the new positions of the pattern (10) in accordance with the new values of the trajectory parameters resulting from the movement (51) of the control point.

10. Device according to any one of the preceding claims, **characterised in that** it comprises a map database (42) which contains digitised maps which represent a geographic zone which comprises the representation of the zone (1), the pattern (10) being superimposed on a geographic zone.

11. Device according to any one of the preceding claims, **characterised in that** the position, the orientation and/or the shape of the trajectory pattern (10) are defined by a set of characteristic points (11, 12, 13, 14), the position of the points is determined by the trajectory parameters.

12. Device according to claim 11, **characterised in that** one point of the set of characteristic points is a drop start point CARP (12) and another point of the set of characteristic points is a drop end point EOD (13), the points being capable of being modified by the operator.

13. Device according to any one of claims 10 to 12, **characterised in that** the actual aerial trajectory followed by an aircraft is superimposed on the drop trajectory.

14. Device according to any one of the preceding claims, **characterised in that** the display means comprise an interactive screen (40).

15. Device according to claim 14, **characterised in that** the screen (40) is a touch screen.

16. Device according to claim 15, **characterised in that** the touch screen (40) is in the form of a tablet.

17. Device according to any one of claims 1 to 15, **characterised in that** the calculation and storage means (43, 45) are implanted in an on-board processor.
